Europäisches Patentamt

European Patent Office

Office européen des brevets

(11) Numéro de publication: **0 359 302**
**A1**

## (12) DEMANDE DE BREVET EUROPEEN

(21) Numéro de dépôt: **89202125.4**

(51) Int. Cl.⁵: **H04N 5/12**

(22) Date de dépôt: **22.08.89**

(30) Priorité: **23.08.88 FR 8811119**

(43) Date de publication de la demande:
**21.03.90 Bulletin 90/12**

(84) Etats contractants désignés:
**DE FR GB**

(71) Demandeur: **LA RADIOTECHNIQUE PORTENSEIGNE**
**51, Rue Carnot**
**F-92150 Suresnes(FR)**
(84) **FR**

Demandeur: **N.V. Philips' Gloeilampenfabrieken**
**Groenewoudseweg 1**
**NL-5621 BA Eindhoven(NL)**
(84) **DE GB**

(72) Inventeur: **Bensi, François Société Civile S.P.I.D.**
**209, rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

(54) **Dispositif de synchronisation de trame de télévision.**

(57) Ce dispositif reçoit d'un séparateur de synchronisation (2) un signal de synchronisation composite. Il comprend un oscillateur pilote (5) dont la fréquence est asservie par une boucle d'asservissement de phase basée sur les impulsions de synchronisation de ligne, et qui fournit un signal périodique (T) au moyen duquel le signal de trame séparé est échantillonné dans une porte (8) pour fournir la commande de déviation de trame (F).

Selon l'invention ledit signal périodique (T) est positionné dans le temps de façon à ne pas se produire pendant une impulsion de synchronisation de ligne, et la porte (8) est reliée directement au séparateur de synchronisation (2).

Application aux récepteurs de télévision.

FIG. 1

## Dispositif de synchronisation de trame de télévision

L'invention concerne un dispositif de synchronisation de trame pour un récepteur de télévision, recevant d'un séparateur de synchronisation un signal de synchronisation composite qui comporte des impulsions de synchronisation de ligne et des impulsions de synchronisation de trame, et comprenant un oscillateur pilote dont la fréquence est asservie par une boucle d'asservissement de phase basée sur les impulsions de synchronisation de ligne, un circuit qui fournit à partir de l'oscillation pilote un signal de définition de temps dont la fréquence est un multiple de la fréquence de ligne, et une porte qui, à partir dudit signal de définition de temps et dudit signal composite, fournit un signal de commande de déviation de trame.

Ce dispositif s'applique dans les récepteurs de télévision du type PAL ou SECAM.

Un tel dispositif est connu de US-B-3 567 860. Le dispositif décrit dans ce document fait usage, comme d'habitude, d'un filtre passe-bas pour séparer le signal de synchronisation de trame du signal composite. Le signal de trame est remis en forme par un "trigger de Schmitt", mais son instant de début reste néanmoins peu précis: selon la fréquence de coupure du filtre et la tension de seuil du trigger, l'instant de début du signal de trame remis en forme est susceptible de varier notablement dans le temps. De ce fait, bien que ce signal remis en forme soit ensuite échantillonné par des impulsions à deux fois la fréquence de ligne, il peut demeurer une incertitude de une ou plusieurs périodes d'échantillonnage sur l'instant de début du retour de trame.

Un but de la présente invention est d'obtenir un positionnement temporel très précis des impulsions de commande de déviation de trame, l'erreur absolue étant inférieure à 200ns, et aussi d'obtenir une gigue inférieure à 20 nS. Cette condition est notamment exigée pour la réception d'émissions embrouillées dans lesquelles des codes numériques nécessaires pour le désembrouillage apparaissent à des instants définis par rapport au début d'une trame.

Un autre but de l'invention est de simplifier la réalisation du dispositif.

Ces buts sont atteints du fait que le dispositif comporte des moyens pour positionner dans le temps le signal de définition de temps de façon qu'il ne se produise jamais pendant une impulsion de synchronisation de ligne. Ceci permet de relier directement la porte au séparateur de synchronisation : de ce fait on économise le filtre passe-bas et le trigger de Schmidt.

De préférence la fréquence du signal de définition de temps est un multiple pair de la fréquence de ligne compris entre un et huit .

Selon une variante préférée, le dispositif est muni d'un compteur des périodes de l'oscillateur, avec une remise à zéro périodique sur une valeur de comptage prédéterminée qui fournit les impulsions de commande de déviation de ligne, et d'un détecteur de valeur de comptage associé au même compteur, qui fournit lesdits signaux de définition de temps.

La description qui va suivre, en regard des dessins annexés décrivant des exemples non limitatifs fera bien comprendre comment l'invention peut être réalisée.

La figure 1 est un schéma d'un dispositif selon l'invention.

La figure 2 représente un signal video composite durant une période de suppression de trame.

La figure 3 représente des signaux rencontrés dans le dispositif représenté à la figure 1.

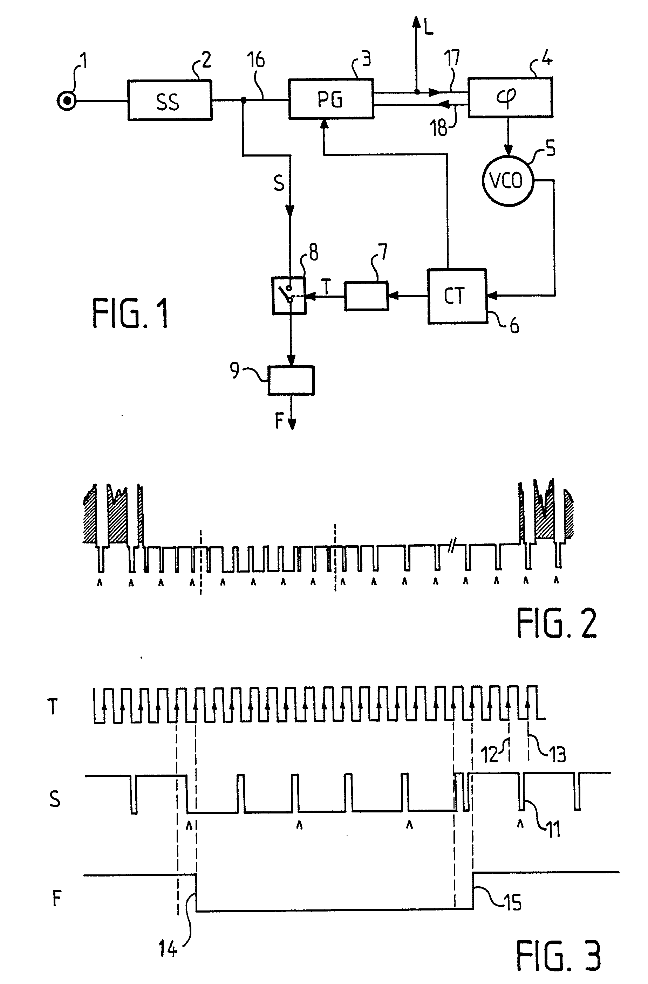

Un signal video composite tel que celui représenté sur la figure 2 est amené sur la borne d'entrée 1 du circuit de la figure 1, reliée à l'entrée d'un séparateur de synchronisation 2 à la sortie duquel est disponible sur la connexion 16 un signal de synchronisation composite qui comporte des impulsions de synchronisation de ligne et des impulsions de synchronisation de trame.

Le dispositif comporte un oscillateur pilote 5 à fréquence réglable par une tension, ladite fréquence étant asservie par une boucle composée d'un compteur 6, d'un générateur d'impulsions 3, et d'un comparateur de phase 4. La fréquence nominale est ici de six mégahertz. L'oscillation produite est fournie au compteur 6 qui en compte les périodes et fournit la valeur de comptage au générateur d'impulsions 3 qui fournit une impulsion pour une valeur de comptage déterminée. Une période dure 0.16 $\mu$S, et une durée de déviation de ligne en comprend donc 384. Avec une périodicité de 384 le compteur est remis à zéro et, avec la même périodicité, le générateur 3 fournit une première impulsion au comparateur de phase 4 sur la connexion 17. Un signal de commande L pour les circuits de déviation horizontale est prélevé sur cette connexion. Le générateur 3 sépare aussi les impulsions de ligne du signal composite 16 et, pour chaque impulsion de ligne, il fournit une seconde impulsion sur la connexion 18 au comparateur de phase 4 qui commande de façon connue la fréquence de l'oscillateur en fonction de l'écart de phase entre la première et la seconde impulsion.

La valeur de comptage est également fournie à un détecteur de valeur de comptage 7. Ce dernier fournit une impulsion T, dite signal de définition de temps, pour les valeurs de comptage multiples de 64 c'est à dire à six fois la fréquence de ligne. Cette impulsion est fournie à une porte 8 pour commander l'échantillonnage du signal de synchronisation composite 16.

Dans l'art antérieur, la remise à zéro du compteur et la fourniture de la première impulsion au comparateur de phase sont synchrones. Ici au contraire un décalage est introduit volontairement entre ces deux événements. A cet effet l'impulsion du générateur 3 est fournie au comparateur pour une valeur de comptage de 32, par exemple (le compteur est toujours remis à zéro pour une valeur de comptage de 384). Du fait de l'action du comparateur de phase sur l'oscillateur, la valeur de comptage 32 coincide avec le début d'une impulsion de retour de ligne séparée.

En fin de compte, donc, le sigal de définition de temps se produit pour les valeurs de comptage 0 et 64 (et aussi 128, 192, etc), alors que le début des impulsions de retour de ligne correspond à la valeur de comptage 32: le signal de définition de temps est positionné dans le temps de façon qu'il ne se produise jamais pendant une impulsion de synchronisation de ligne.

Le signal échantillonné par la porte 8 est fourni à un circuit de maintien ("latch") 9, qui mémorise la valeur du signal jusqu'à l'échantillonnage suivant. La sortie F de ce circuit fournit le signal de commande de déviation de trame.

Dans la partie de signal video composite normalisé représentée à la figure 2, la fraction comprise entre les lignes verticales en pointillé est représentée dilatée dans le temps à la ligne S sur la figure 3. Sur cette figure, la ligne T représente un signal de définition de temps dont la fréquence est six fois celle de la déviation de ligne, et qui déclenche un échantillonnage dans la porte 8 lors de ses fronts montants. A la ligne S, des têtes de flèche verticales indiquent les instants de début de retour de ligne. On peut constater en examinant une impulsion de retour de ligne, par exemple 11, qu'elle est comprise entre les deux signaux de définition de temps 12 et 13.

A la ligne F est représenté le résultat de l'échantillonnage du signal S par le signal T, mémorisé entre deux échantillonnages successifs, c'est à dire le signal en sortie du circuit 9. On obtiendrait un signal un peu différent, mais fondamentalement équivalent, si l'on échantillonnait le signal T par le signal S, c'est à dire en commandant la porte 8 par le signal S pour échantillonner le signal T.

Au début de la période de temps représentée, chaque signal de définition de temps échantillonne une valeur haute du signal S. Le premier échantillon de valeur basse est obtenu en 14. Ensuite les échantillons sont de valeur basse jusqu'en 15 où le signal F retrouve une valeur haute qu'il conservera jusqu'au retour de trame suivant.

Si les signaux de définition de temps étaient synchrones avec les retours de lignes, comme il est naturel qu'ils le soient, un échantillon sur six correspondrait à un retour de ligne et introduirait un créneau vers le bas dans le signal F. Du fait du décalage, le dispositif fonctionne comme expliqué ci-dessus, avec une liaison directe entre le point 16 et la porte 8, c'est à dire qu'il n'est plus nécessaire d'utiliser un filtre passe-bas entre le séparateur 2 et la porte 8 pour séparer les signaux de commande de déviation de trame des impulsions de synchronisation de ligne, et en outre la précision temporelle des signaux de commande des retours de trame est excellente.

## Revendications

1. Dispositif de synchronisation de trame pour un récepteur de télévision, recevant d'un séparateur de synchronisation un signal de synchronisation composite qui comporte des impulsions de synchronisation de ligne et des impulsions de synchronisation de trame, et comprenant un oscillateur pilote dont la fréquence est asservie par une boucle d'asservissement de phase basée sur les impulsions de synchronisation de ligne, un circuit qui fournit à partir de l'oscillation pilote un signal de définition de temps dont la fréquence est un multiple de la fréquence de ligne, et une porte qui, à partir dudit signal de définition de temps et dudit signal composite, fournit un signal de commande de déviation de trame, caractérisé en ce qu'il comporte des moyens pour positionner dans le temps le signal de définition de temps de façon qu'il ne se produise jamais pendant une impulsion de synchronisation de ligne, et en ce que la porte est reliée directement au séparateur de synchronisation .

2. Dispositif selon la revendication 1, caractérisé en ce que la fréquence du signal de définition de temps est un multiple pair de la fréquence de ligne compris entre un et huit .

3. Dispositif selon l'une quelconque des revendications 1 ou 2, caractérisé en ce qu'il est muni d'un compteur des périodes de l'oscillateur, avec une remise à zéro périodique sur une valeur de comptage prédéterminée qui fournit les impulsions de commande de déviation de ligne, et d'un détecteur de valeur de comptage associé au même compteur, qui fournit lesdits signaux de définition de temps.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3 567 860 (OLIVER et al.)<br>* Colonne 2, ligne 4 - colonne 3, ligne 50; figure 1 *<br>----- | 1 | H 04 N 5/12 |
| | | | **DOMAINES TECHNIQUES RECHERCHES (Int. Cl.5)**<br><br>H 04 N |

Le présent rapport a été établi pour toutes les revendications

| Lieu de la recherche | Date d'achèvement de la recherche | Examinateur |
|---|---|---|
| LA HAYE | 21-12-1989 | YVONNET J.W. |

EPO FORM 1503 03.82 (P0402)